# EUROPEAN PATENT APPLICATION

(11) **EP 1 580 929 A1**
(43) Date of publication of application: **28.09.2005**
(21) Application number: 04290823.6
(22) Date of filing: 26.03.2004
(51) Int. Cl.: H04L 12/26

(54) **Performance monitoring of transparent LAN services**

(71) Applicant: ALCATEL, 75008 Paris (FR)
(72) Inventor: Fontana, Michele, 23878 Verderio Superiore (Lecco) (IT); Gasparini, Germano, 20040 Carnate (Milano) (IT); Mazzini, Andrea, 20060 Pessano con Bornago (Milano) (IT)
(74) Representative: Menzietti, Domenico

(57) **Abstract**

A method is described for performance monitoring of Transparent LAN Services according to layer 2 measurements of each flow carrying one Transparent LAN Service, in order to check if requirements defined by traffic parameters for the Transparent LAN Services are fulfilled. The method makes use of a central network management system for retrieving the layer 2 measurements from network elements interfaces at related times and multiple times in a defined time unit.

## Description

The present invention relates to the telecommunication field and more in particular to the Quality of Service (QoS) in a telecommunication network. Still more in particular the invention concerns Performance Monitoring in order to check QoS of a Transparent Local Area Network Service (TLS).

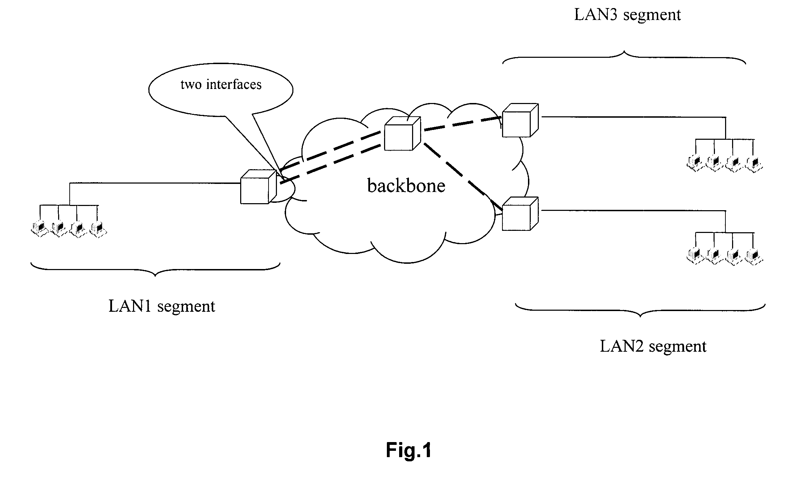

Referring to Fig.1, a Transparent LAN Service is a service that emulates the functionality of a traditional LAN interconnecting different LAN segments over a generic backbone network in a transparent way, that is making the different LAN segments to behave as one LAN, allowing connectivity between 2 remote stations belonging to different LAN segments and providing to the remote stations the same capabilities (such as throughput, delay) they normally obtain from a traditional LAN which connects two local stations. Ethernet is a widespread LAN technology because it is one of the cheapest and most flexible technology to access to a backbone network and also offers good performance, with evolution from 10 Mbps to 100 Mbps until 1 Gbps, as defined in IEEE (Institute of Electrical and Electronics Engineers) 802.3 Part 3 (2000), 802.3u (1995) and 802.3ab (1999) respectively. LAN segments are usually connected to the backbone network through a LAN switch or a router, which perform conversion from the LAN to the backbone protocol.

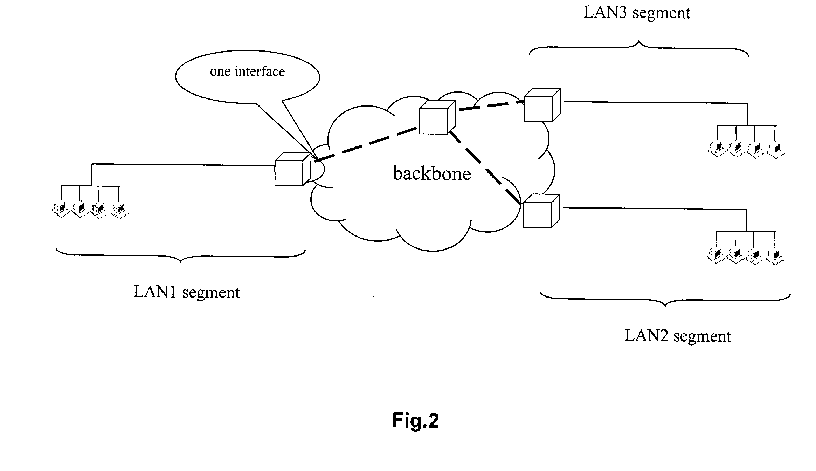

The Transparent LAN Service can be carried on the backbone network on a leased or shared circuit. In the first case there is a physical circuit (each one with a fixed bandwidth) for each service and this is very expensive. Referring as an example to Fig.1, if LAN1 has to be interconnected to LAN2 and LAN3, LAN1 requires two interfaces towards the backbone. If N LANs have to be interconnected, (N-1) interfaces are required for connecting each LAN to the backbone network. In a shared approach the same circuit (and so the same bandwidth) carries more than one service and so it is cheaper. Referring to Fig.2, LAN1 requires only one interface towards the backbone; in general, if N LAN has to be interconnected, only one interface is required for connecting each LAN to the backbone network. Moreover in leased architecture there is a low bandwidth utilization: in fact the circuit is not used when the related service is not transmitting data. In a shared architecture the same circuit could be used for transmitting data of other services when one service is not transmitting data and so there is a better bandwidth utilization.

In modern telecommunication networks a Transparent LAN Service is carried in the backbone network over a shared circuit, because less network interfaces are required and bandwidth in the backbone is expensive. Since the same resource is shared among many services, the problem of Quality of Service arises. In fact it could happen that performance of each Service carried over the same circuit are not good enough, expecially in case of network congestion. Backbone protocols like Asynchronous Transfer Mode (ATM) guarantee Quality of Service but are very expensive and complex, because they requires ATM switches which are very expensive. The subsequent effort is to find a cheap backbone network able to carry the Transparent LAN Service. SDH (Synchronous Digital Hierarchy) technology, defined in ITU-T G.707/Y1322 (10/2000), is already available for this purpose, because many SDH circuits are already present in telecommunication networks. In this direction, LAN frames are mapped in SDH Virtual Container according to a Generic Map Procedure (GFP), defined in ITU-T G.7041/Y.1303 (12/2001). GFP is not restricted only to SDH, but provides a procedure for mapping of a generic client signal over both SDH and Optical Transport Networks (OTN) (OTN is defined in ITU-T G.709/Y.1331 3/2003). A further advantage of GFP encapsulation is transparency to all upper layer protocols, for example to layer 3 protocols of Open Systems Interconnection (OSI) stack, like Internet Protocol (IP), Internetwork Packet Exchange (IPX), Multi-Protocol Label Switch (MPLS). All Transparent LAN Services may be carried in the backbone network according to GFP over one shared circuit, so that only one interface is required for connecting the LAN segment to the backbone network; the Transparent LAN Service is mapped for example over SDH and each Transparent LAN Service is carried by one Virtual Container (VC12, VC3 or VC4). Although only one interface is used for interconnecting each LAN to the backbone network, this solution has still the disadvantage of a low bandwidth utilization of each Virtual Container, but the advantage is that Quality of Service is guaranteed and can be checked with well known SDH performance monitoring. In an optimized solution input data traffic is aggregated in a network element connecting the LAN to the backbone: the same Virtual Container can carry data belonging to different Transparent LAN Services. The advantage is that a lot of bandwidth is saved, because less Virtual Container are required to carry the same data traffic; the disadvantage is that it is strictly necessary to check the Quality of Service of each TLS in the same Virtual Container and that this Quality of Service can't be checked through the performance monitoring available for SDH, because this is an indication of the performance of the Virtual Container and of all the TLSs carried by one Virtual Container and not of each single TLS in one Virtual Container.

The Quality of Service of a Transparent LAN Service is defined by requirements specified in Service Level Agreements (SLA). A SLA is a contract between a service provider and a customer, where the Quality of the Service (in this case of a Transparent LAN Service) is defined in quantitative or statistical traffic parameters, like throughput (or bandwidth), delay, packet loss, jitter, or in terms of relative priority of access to the network. In this way the service provider can offer to the customers different kinds of Quality of Services, each one with different pricing, and also inside the same customer it is possible to prioritize one service over others. Referring as an example to Ethernet, each Transparent LAN Service is carried by one Q-tagged frame, defined in IEEE 802.1Q (1998). This frame includes a tag header (Q-tag) immediately following the source Media Access Control (MAC) address field; this tag includes a VLAN-ID (12 bits) and priority bits (3 bits). The VLAN-ID is a Virtual LAN Identifier and can be used to identify a customer. This is also used by Ethernet switches for traffic segregation: frames addressed to a particular customer are forwarded only to those LAN segments that are required in order to reach members of that customer. Moreover priority bits can be used for the same customer for identifying expedited classes of traffic or for different customers for defining a relative priority of access to the backbone network.

Traffic parameters used for defining the throughput of an Ethernet TLS are the Committed Information Rate (CIR), Committed Burst Size (CBS), Peak Information Rate (PIR) and Peak Burst Size (PBS). CIR is the minimun guaranteed rate that the network will deliver for an Ethernet TLS under normal operating conditions. PIR is the maximum rate at which Ethernet frames are allowed to burst above the CIR. CBS specifies the amount of buffering allocated for Ethernet frames to be en-queued when the traffic is continuously received at a PIR that is set below the effective line rate. PBS is the maximum amount of buffering allocated: incoming traffic over PIR is buffered up to the specified PBS. If the Quality is described by CIR and PIR, these requirements are fulfilled if throughput measured for each Ethernet TLS is comprised between CIR and PIR. Services providers usually offers to the customers three classes of Services with different Quality, defined from CIR and PIR, in order to allocate a different bandwidth: best effort, regulated and guaranteed. The best effort is described by CIR=0 and PIR > 0, regulated by PIR >= CIR and CIR >0, guaranteed by CIR=PIR >0. Best effort Service has no guaranteed bandwidth (but is the less expensive for the customer) and monitoring of the Quality is not usually performed.

IEEE 802.3 and IETF (Internet Engineering Task Force) in RFC2665 and RFC2863 define a great number of counters for a generic network interface and also for an Ethernet interface; the values of these counters are used for maintenance and they are retrieved by a process running on a computer when required by a network operator or automatically by the process itself. The measurements are performed locally at each interface, from different processes or operators and at different time for each interface. Referring to Ethernet counters, there are some differences between IEEE 802.3 and IETF counters: in the second MAC header and the Frame Checking Sequence (FCS) of the Ethernet frame are included in the calculation of the number of bytes, while in the first these fields are not included. According to OSI model wherein functions of a telecommunication network are divided in 7 layers, the frame is referred to layer 2 level and the packet to layer 3 level. Referring to IETF Ethernet counters, the following one are defined for an Ethernet interface:
- ifInOctets: number of octets in valid MAC frames received on the interface, including the MAC header and FCS. This includes the number of octets in valid MAC Control frames received on the interface;
- ifOutOctets: number of octets transmitted in valid MAC frames on the interface, including the MAC header and FCS. This includes the number of octets in valid MAC Control frames transmitted on the interface;
- iflnUcastPkts: number of packets, delivered by this layer to a higher layer, which were not addressed to multicast or broadcast address at this sub-layer. This does not includes MAC Control frames;
- IfOutUcastPkts: number of packets that higher-level layers have requested be transmitted, and which were not addressed to a multicast or broadcast address at this layer, including packets discarded or not sent. This does not includes MAC Control frames;
- IfOutDiscards: number of outbound packets which were chosen to be discarded even though no errors had been detected to prevent them being transmitted, due to buffer congestion;
- dot3StatsAlignmentErrors: number of received frames that are not an integral number of octets and do not pass the FCS check;
- dot3StatsFCSErrors: number of received frames that are an integral number of octets in length but do not pass the FCS check;
- dot3StatsFrameTooLongs: number of received frames that exceed the MTU (Maximum Transfer Unit).
In LAN protocols octet is synonymous of byte. The words "higher-level layer" in the definition of IfInUcastPkts, IfOutUcastPkts and IfOutDiscards means that the calculation is performed on the number of layer 3 packets, that is the number of packets sent/ received by Ethernet layer 2 to/ from the layer 3 above; on the contrary iflnOctets and ifOutOctets counts the number of octets of layers 2 frames, that is the number of octets of frames received/ sent by Ethernet layer 2 to/ from the layer 1 below. For example the calculation of the number of octets includes the octets in valid MAC Control frames received or transmitted, while the calculation of the number of packets does not include the MAC Control frames. All the counters perform calculation of the overall traffic crossing the Ethernet interface and so this calculation is related to all the Transparent LAN Services crossing the Ethernet interface.
IETF also provides in RFC2668 maintenance counters for layer 1 measurements, that is the physical interface level:
- dot3HCStatsSymbolErrors: number of times there is an invalid data symbol when a valid carrier is present;
- availableExits: number of times that ifMauMediaAvailable leaves the state available;
- ifMauJabberingStateEnters: number of times that mauJabberState enters the jabbering state;
- ifMauFalseCarriers: number of false carrier events.

According to the known solutions, it is only possible to provide aggregate measurements including all Services, thus providing access only to general performance information; moreover only a vague view is given because measurements are performed from different processes and at different times.

In view of the drawbacks and deficiencies of the known and standardized solutions, as described above, the main object of the present invention is to provide a method for performance monitoring which makes a more sophisticated monitoring; this is achieved by a method according to claim 1. An advantage of the invention is the ability to perform monitoring of the performance of each Transparent LAN Service in order to check if traffic requirements defined in Service Level Agreements are fulfilled. A further advantage is the ability to monitor byte throughput and frame throughput of Transparent LAN Services.

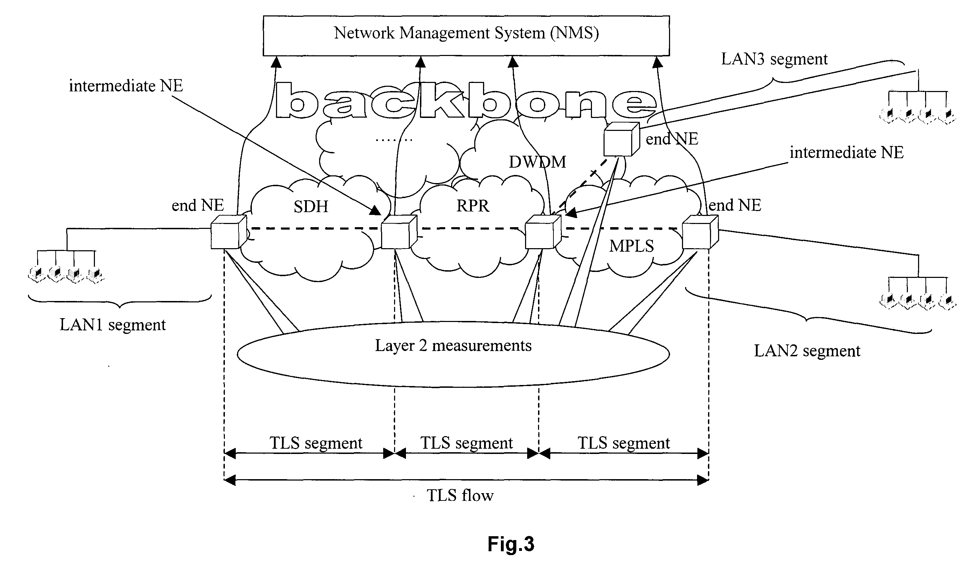

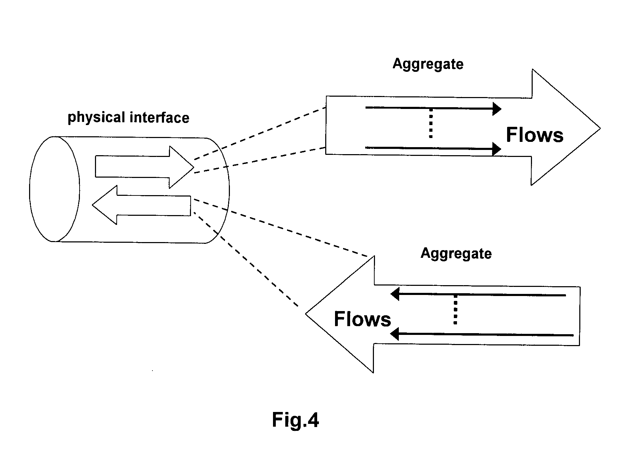

Some layer 2 measurements, only used for maintenance purposes, can be used with some modifications for checking the Quality of a Service, that is for monitoring the performance of a Transparent LAN Service. It is necessary to define in a Transparent LAN application a TLS flow: this is a unidirectional traffic stream between 2 remote network elements for which a specific level of Quality of Service is defined. A TLS flow is the equivalent in the network of a Transparent LAN Service, that is how a Service is physically carried over the network; referring to Ethernet, each flow is carried by a Q-tagged frame and it is identified by MAC source address, MAC destination address, VLAN ID and priority bits. A physical LAN interface carries many TLS flows, having each one a Quality of Service described by quantitive or qualitative parameters. Referring to Fig.4, we can detect three levels for each network interface:
- physical level: this is the layer 1 of the network interface;
- aggregate level: this is the layer 2 and includes all TLS flows crossing the interface;
- flow level: this is layer 2; each flow carries one TLS (and for Ethernet is a Q-tagged frame).
The aggregate level is not enough for monitoring Quality of each Transparent LAN Service: the flow level is also required because it is necessary to guarantee Quality of each Service carried by one TLS flow and each TLS flow can carry different Quality of Service requirements. Quality of Service can't be checked on interfaces at layer 1 level (SDH performance monitoring) as explained above and must be checked on interfaces at layer 2 level (frames/octets of Q-tagged frames for Ethernet). Referring to Fig.3, Transparent LAN Services flows are indicated with a broken line and can cross a backbone network including sub-networks carrying different protocols, like SDH, OTN, Resilent Packet Routing (RPR), Multi-Protocol Label Switch (MPLS), Dense Wavelength Division Multiplexing (DWDM). An end network element connects a LAN to the backbone network, while an intermediate network element connects 2 sub-networks in the backbone network. The traffic stream between 2 end network elements is the TLS flow. A TLS flow can be divided in TLS segments, between an end network element and an intermediate network element or between 2 intermediate network elements. Layer 2 measurements can be performed at interfaces of two end network elements, of an end network element and an intermediate network element or of two intermediate network elements. Each end network element requires only one interface towards the LAN and includes at least one interface towards the backbone network; each intermediate network element includes at least one interface for each sub-network. Transparent LAN Services are carried from the interface towards the LAN of a first end network element to the interface towards the LAN of a second end network element, crossing the intermediate network elements. The required Quality of each Service is described by traffic parameters (CIR, PIR, CBS, PBS) defined in SLA, as decribed above. For each service layer 2 measurements are performed at interfaces of network elements carrying the Transparent LAN Services through some counters at hardware level. Moreover a central Network Management System (NMS) is required to control the network elements in order to retrieve the layer 2 measurements results from at least the two interfaces towards the LAN of two end network elements and in order to retrieve these results at the same time (for example at the same hour of the same day or at the end of the same day of the same month) and for the same time unit (one day or one month respectively). From these measurements it is possible to estimate the Quality of each Service in order to check if requirements defined by traffic parameters are fulfilled. Several measurements are required to have a good estimation of the Quality: for example each hour in a day the values of the counters are collected by the NMS from the network elements and at the end of the day the estimation of the Quality is performed from the 24 measurements of the day, in order to check if traffic parameters are fulfilled for the current day. Layer 2 measurments results are usually retrieved periodically (every hour in a day or every day in a month), but this is not mandatory. Alarms are generated when a performance threshold is exceeded, advising the network operator so that counteractive measures can be taken. Layer 2 measurments results are stored in order to have an history of the Quality of the Service: for example each hour the values are stored in order to have 24 values of the current day and at the end of each day the values are stored in order to have values of each day in a month. This historic information is very important because when an alarm is generated, the history can be used to understand when the failure occurred, in order to correlate this information with the network behaviour. For example, suppose to provide a new Transparent LAN Service defined by a big value of CIR, and as a consequence there is a degrade of the Quality of some Services already present in the network. An alarm is generated and reading the history it is possible to understand the reason of the degrade, that is the additional Service with too big value of CIR. In this way the network operator can remove the additional Service and can try to add the Service with a lower value of the CIR.

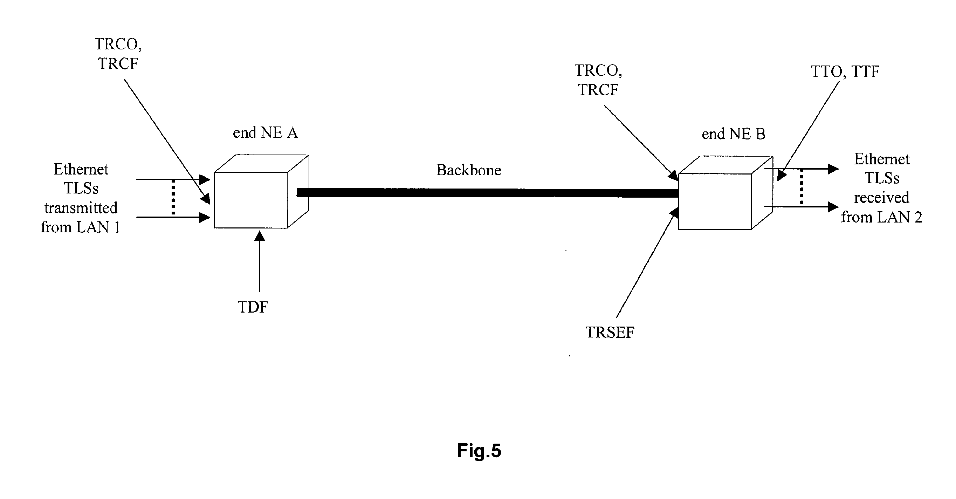

Fig.1 and Fig.2 relate to prior art. Fig.1 shows Transparent LAN Services interconnecting 3 LANs across a backbone network through leased circuits. Fig.2 shows Transparent LAN Services interconnecting 3 LANs across a backbone network through shared circuits. Fig.3 shows Transparent LAN Services interconnecting 3 LANs across a multiprocol backbone network through shared circuits, including end Network Elements (NE) and intermediate Network Elements for performance monitoring of the Service through layers 2 measurements results retrieved by a central Network Management System (NMS). Fig.4 shows more in details a network interface where monitoring is performed, divided in 3 levels: physical, aggregate and flow. Fig.5 shows a preferred embodiment wherein some counters performing layer 2 measurements are used for monitoring Quality of Transparent LAN Services.

In a preferred embodiment the following set of Ethernet counters performing layer 2 measurements can be used at an Ethernet interface for monitoring the performance of Ethernet Transparent LAN Services in order to check the Quality of the Services; they can be used both at aggregate level and until the flow level and they all refer to layer 2 of OSI model:
- Total Received Correct Octets (TRCO): number of octets of frames received correctly;
- Total Transmitted Octets (TTO): number of octets of transmitted frames;
- Total Received Correct Frames (TRCF): number of frames received correctly;
- Total Transmitted Frames (TTF): number of transmitted frames.
The following counters can still be used for maintenance at aggregate level:
- Total Discarded Frames (TDF): number of Ethernet frames which were chosen to be discarded for buffer congestion;
- Total Received Service Errored frames (TRSEF): it is the sum of three contributions dot3StatsAlignmentErrors, dot3StatsFCSErrors and dot3StatsFrameTooLongs.
Referring to Fig.5 and only to layer 2 measurements of one flow carrying one Transparent LAN Service, TRCO at network elements A and B and TTO at network element B can be used for monitoring the Quality of a Transparent LAN Service from network element A to network element B (unidirectional monitoring), in order to check if traffic parameters CIR and PIR defined for the Transparent LAN Service are fulfilled. TRCO values are retrieved by NMS each hour in a day at end network element A at interface towards the LAN and at end network element B at interface towards the backbone and each hour the difference is evaluated; if the difference between the value at network element A and the value at network element B is too big for a pre-defined number of subsequent hours (for example 3 hours), an alarm is generated by the NMS. In this case the network operator can retrieve the value of TRSEF at network element B at interface towards the backbone and of TDF at network element A, in order to detect and localize the defect: if TRSEF has a high value, probable layer 1 link errors occurred and if TDF has a high value, probable network element A buffer overflow occurred. It is allowed a small difference between TRCO at network element A and TRCO at network element B, mainly due to network propagation delays. On the contrary if the difference between TRCO measured at network element B and at network element A is small during the all day, an estimation of the Quality can be performed at network element B through TTO. Each hour the value of TTO of network element B is retrieved by the NMS and stored, so that at the end of the day 24 values are available. The Quality of the Service can be estimated performing an arithmetic mean of the 24 TTO values of the day, that is calculating the sum of the values and dividing by 24: this is an estimation of the average byte throughput for the day. If this value is comprised between CIR and PIR, this means that requirements for this Transparent LAN Service have been fulfilled for the day.

The same method can be used for measuring the frame throughput, using TRCF at network element A and B instead of TRCO and using TTF at network element B instead of TTO. This is useful in video applications, because only some frames can be lost in order to have a good Quality.

It can also be useful to perform layer 2 measurements of a TLS segment, in order to check the Quality of the Services in a sub-network; this is required in case of a degrade of the Quality of a Service, in order to detect and localize the sub-network responsible for the degrade of the Quality.

Since traffic stream is usually bidirectional, the Quality of Services is usually checked bidirectionally, that is from end network element A to end B and viceversa.

The preferred embodiment makes use of Ethernet counters for monitoring a Transparent LAN Service between Ethernet LANs, but the same method can be used for monitoring the Quality of Services until the flow level of other LAN technologies, like Token Ring (IEEE 802.5), Token Bus (IEEE 802.5), Distributed Queue Dual Bus (IEEE 802.6), FDDI (Fiber Distributed Data Interface), provided that it is possible to identify a Transparent LAN Service carryed by a flow, for example with a label in a frame to differentiate the Services between customers or also for Services of the same customer.

The invention can be advantageously implemented through a software program like C, C++ or Java running on a hardware and performing network management functions to control the network elements and including a first process for receiving traffic parameters of the Transparent LAN Services, a second process for providing the Services to the network elements according to the traffic parameters, a third process for activation of layer 2 measurements (for example resetting the value of counters and starting the measurements), a fourth process for retrieving the layer 2 measurements results in order to estimate the Quality and to check if requirements are fulfilled.

## Claims

1. Method for performance monitoring in a telecommunication network including at least two Local Area Networks (LAN) connected by a backbone network, the first Local Area Network being connected to the backbone network by a first network element including at least a first network interface towards the first Local Area Network and at least a second network interface towards the backbone network, the second Local Area Network being connected to the backbone network by a second network element including at least a third network interface towards the second LAN and at least a fourth network interface towards the backbone network, the telecommunication network further including a central Network Management System (NMS) to control the network elements, the method comprising the following steps:
- the network management providing at least two Transparent Local Area Network Services (TLS) between the first and the third network interface making use of a layer 2 aggregate level, the aggregate level including at least two flow levels (TLS flows), each flow level carrying one Transparent Local Area Network Service;
- each Transparent Local Area Network Service being **characterized by** at least one traffic parameter (CIR, PIR, CBS,PBS) for describing the Quality of the Transparent Local Area Network Service;
the method being **characterized by**:
- performing layer 2 measurements (TRCO, TRCF, TTO, TTF) at flow level for at least one Transparent Local Area Network Service separately at at least one interface of the first network element and at least one interface of the second network element;
- the network management retrieving the layer 2 measurements results of at least the two interfaces at related times and multiple times in a defined time unit;
- the network management calculating from results at least one estimation of the Quality of the at least one Transparent Local Area Network Service in the defined time unit in order to check if requirements defined by at least one traffic parameter (CIR, PIR, CBS, PBS) are fulfilled for the at least one Transparent Local Area Network Service in the defined time unit.

2. Method according to claim 1, wherein the layer 2 measurements include measurements of Total Received Correct Octets (TRCO) at the first network interface and at the fourth network interface, in order to evaluate the difference between the value measured at the first and at the second network element.

3. Method according to claim 1, wherein the layer 2 measurements include measurements of Total Received Correct Frames (TRCF) at the first network interface and at the fourth network interface, in order to evaluate the difference between the value measured at the first and at the second network element.

4. Method according to claim 2, wherein the layer 2 measurements are Total Transmitted Octets (TTO) at the third network interface, in order to evaluate byte throughput.

5. Method according to claim 3, wherein the layer 2 measurements are Total Transmitted Frames (TTF) at the third network interface, in order to evaluate frame throughput.

6. Method according to claim 1, wherein the backbone network includes at least two sub-networks carrying differerent protocols (SDH, RPR, OTN, MPLS) and connected by an intermediate network element, wherein additional layer 2 measurements are performed at at least one interface of at least one intermediate network element.

7. Software program to perform network management functions to control network elements of a telecommunication network, the telecommunication network including:
- at least two Local Area Networks (LAN) connected by a backbone network, the first Local Area Network being connected to the backbone network by a first network element including at least a first network interface towards the first Local Area Network and at least a second network interface towards the backbone network, the second Local Area Network being connected to the backbone network by a second network element including at least a third network interface towards the second Local Area Network and at least a fourth network interface towards the backbone network;
- at least two Transparent Local Area Network Services (TLS) between the first and the third network interface making use of a layer 2 aggregate level, the aggregate level including at least two flow levels (TLS flows), each flow level carrying one Transparent Local Area Network Service;
the program including:
- a first process for receiving at least one traffic parameter (CIR, PIR, CBS, PBS) for each Transparent Local Area Network Service for describing the Quality of the Transparent Local Area Network Service;
- a second process for providing to the first and second network element each Transparent Local Area Network Service according to each corresponding traffic parameter;
the program being **characterized by**:
- a third process for activation of layer 2 measurements at flow level for at least one Transparent Local Area Network Service separately at at least one interface of the first network element and at least one interface of the second network element; and
- a fourth process for retrieving the layer 2 measurements results of at least the two interfaces at related times and multiple times in a defined time unit, for calculating from results at least one estimation of the Quality of the at least one Transparent Local Area Network Service in the defined time unit in order to check if requirements defined by at least one traffic parameter (CIR, PIR, CBS, PBS) are fulfilled for the at least one Transparent Local Area Network Service in the defined time unit.
